# EUROPÄISCHE PATENTSCHRIFT

(11) **EP 3 775 587 B1**
(45) Veröffentlichungstag und Bekanntmachung des Hinweises auf die Patenterteilung: **13.04.2022**
(21) Anmeldenummer: 19712525.5
(22) Anmeldetag: 12.03.2019
(51) Int. Cl.: F16C 17/02, B60G 21/055, F16C 23/04, F16C 25/04, F16C 27/02, F16C 33/04, F16C 33/14

(54) **SCHWENKMOTOR EINES AKTIVEN WANKSTABILISATORS**
OSCILLATING MOTOR OF AN ACTIVE ROLL STABILISER
MOTEUR OSCILLANT D'UN STABILISATEUR DE ROULIS ACTIF

(30) Priorität: 12.04.2018 DE 102018205509
(43) Veröffentlichungstag der Anmeldung: 17.02.2021
(73) Patentinhaber: ZF Friedrichshafen AG, 88046 Friedrichshafen (DE)
(72) Erfinder: SCHIESS, Marc, 78355 Hohenfels (DE); MAIR, Ulrich, 88048 Friedrichshafen (DE)
(86) Internationale Anmeldenummer: PCT/EP2019/056091
(87) Internationale Veröffentlichungsnummer: WO 2019/197099

(56) Entgegenhaltungen:
- DE-A1- 19 525 575
- DE-A1- 19 546 906
- DE-A1-102015 206 064
- US-A- 1 283 840
- US-A- 5 645 356

## Beschreibung

Die Erfindung betrifft einen Schwenkmotor nach Patentanspruch 1. Gleitlagerbuchsen sind bekannt, sie dienen der Lagerung von Achsen, Wellen, Bolzen oder Zapfen und sind aus einem reibungsarmen Material wie z. B. Kunststoff, Messing oder Bronze hergestellt. Ein Problem bei der Lagerung von Achsen oder Wellen in einer Gleitlagerbuchse besteht darin, dass stets ein gewisses Radialspiel vorhanden ist, welches bei bestimmten Anwendungen, insbesondere bei Stellantrieben mit wechselnder Drehrichtung, insbesondere bei Getrieben unerwünscht ist, da es zu akustischen Auffälligkeiten führt. Man hat daher bereits verschiedene Lösungen für spielfreie Gleitlagerbuchsen vorgeschlagen, beispielsweise in der DE 20 2004 015 680 U1. Die Gleitlagebuchse gemäß der DE 20 2004 015 680 U1 weist eine segmentförmig ausgebildete Buchsenwand auf, wobei sich in axialer Richtung verlaufende Segmente mit geringerem Innendurchmesser und größerem Innendurchmesser über den Umfang abwechseln. Die in radialer Richtung nach innen versetzten Segmente bilden die Anlageflächen für eine in der Gleitlagerbuchse aufzunehmende Welle, während die Segmente mit größerem Innen- und Auendurchmesser mit Presssitz in einer Lagerbohrung sitzen. Die radial nach innen versetzten Segment- oder Auflagerflächen sind durch federnde Stegen mit den äußeren Segmenten verbunden. Aufgrund der segmentartigen Ausbildung der Gleitlagerbuchse wird eine spielfreie Lagerung erreicht. DE 10 2015 206 064 A1 zeigt einen Motor nach dem Oberbegriff von Anspruch 1. DE 195 25 575 A1, US 5 645 356 A, DE 195 46 906 A1 und US 1 283 840 A zeigen jeweils andere Arten von Gleitlagerbuchsen.

Eine Aufgabe der Erfindung besteht darin, einen Schwenkmotor mit einer spielfreien Gleitlagerbuchse vorzuschlagen, insbesondere im Hinblick auf eine Anwendung bei Stellantrieben.

Die Aufgabe der Erfindung wird durch den unabhängigen Patentanspruch 1 gelöst. Vorteilhafte Ausgestaltungen ergeben sich aus den Unteransprüchen.

Nach einem ersten Aspekt der Erfindung wird für eine Gleitlagerbuchse mit einem hohlzylindrischen Buchsenkörper vorgeschlagen, dass einzelne teilweise von der Zylinderwand getrennte Bereiche in radialer Richtung nach innen oder außen versetzt angeordnet und federnd ausgebildet sind. Die erfindungsgemäße Gleitlagerbuchse ist einerseits für eine spielfreie Lagerung von Wellen oder Achsen bestimmt: In diesem Falle wird der Innendurchmesser der Gleitlagerbuchse durch die versetzten, federnd ausgebildeten Bereiche so weit reduziert, dass kein Radialspiel zwischen Welle und Innendurchmesser der Gleitlagerbuchse auftritt. Andererseits ist die erfindungsgemäße Gleitlagerbuchse für eine Lagerung in einer Bohrung, z. B. einer Gehäusebohrung geeignet: In diesem Falle wird die Gleitlagerbuchse auf die Welle oder Achse aufgepresst, wobei die federnden, versetzten Bereiche radial nach außen ausgestellt sind und damit das Spiel zwischen der zylindrischen Außenfläche der Gleitlagerbuchse und der Gehäusebohrung auf Null reduzieren. Als Werkstoffe für die erfindungsgemäße Gleitlagerbuchse können einerseits metallische Werkstoffe wie Messing, Bronze oder Sintermetalle und andererseits auch Kunststoffe verwendet werden. Die erfindungsgemäße Gleitlagerbuchse kann entweder als Spitzgussteil oder durch Span gebende Bearbeitung und Verformung hergestellt werden.

Erfindungsgemäß sind die versetzten Bereiche plastisch verformt, d. h. es handelt sich um eine bleibende Verformung. Hierfür werden die Bereiche zunächst von der Zylinderwand durch Trennfugen getrennt, beispielsweise durch Fräsen oder Laserschneiden, so dass der teilweise getrennte Bereich nach innen oder außen plastisch verformt werden kann. Nach dem Einsetzten einer Welle in die Gleitlagerbuchse federn die versetzten Bereiche elastisch (nach außen) zurück und erzeugen eine Vorspannung gegenüber der Welle, so dass diese spielfrei gelagert ist. In analoger Weise federn die nach außen versetzten Bereiche beim Einsetzen der Gleitlagerbuchse in eine Gehäusebohrung elastisch nach innen und eliminieren somit ein Radialspiel.

Nach einer weiteren bevorzugten Ausführungsform sind die versetzten Bereiche um eine Biegeachse plastisch verbogen oder abgekantet, wobei die Biegeachse in axialer Richtung der Gleitlagerbuchse verläuft. Die Biegekante kann durch ein entsprechend ausgebildetes Werkzeug, welches in die Bohrung der Gleitlagerbuchse eingeführt wird, dargestellt werden. Ein in radialer Richtung nach innen zuzustellender Stempel würde den abgetrennten Bereich um die Biegekante nach innen verbiegen oder verkanten.

Nach einer weiteren bevorzugten Ausführungsform sind die Bereiche als ausgestellte Lappen oder Flügel ausgebildet, welche sich im Wesentlichen in tangentialer Richtung erstrecken und somit eine gleichmäßige Verringerung des Innen- respektive des Außendurchmessers bewirken.

Nach einer weiteren bevorzugten Ausführungsform können mehrere Lappen, verteilt einerseits auf dem Umfang und andererseits in Axialrichtung in der Zylinderwand des Buchsenkörpers angeordnet sein. Damit wird eine gleichmäßige Verringerung respektive Vergrößerung des Innen- respektive des Außendurchmessers erreicht.

Nach einer weiteren bevorzugten Ausführungsform sind die versetzten Bereiche als spiral- oder im Wesentlichen kreisringförmige Elemente ausgebildet, wobei sich diese Elemente im Wesentlichen über den gesamten Umfang erstrecken, ausgenommen den Einspann- oder Verbindungsbereich mit dem Buchsenkörper. Durch die spiral-oder kreisringförmigen Elemente wird eine über den Umfang gleichmäßige Anlage an die Welle oder Achse erzielt.

Nach einer weiteren bevorzugten Ausführungsform sind die spiral- oder kreisringförmigen Elemente durch eine umlaufende Trennfuge und eine in axialer Richtung verlaufende weitere Trennfuge vom Buchsenkörper getrennt. Beide Trennfugen können relativ einfach durch Span gebende Bearbeitung, beispielsweise Schleifen oder Fräsen hergestellt werden. Anschließend erfolgt eine plastische Verformung durch Abkanten. Vorzugsweise sind die spiral- oder kreisringförmigen Elemente an beiden Stirnseiten des Buchsenkörpers angeordnet, wodurch eine in Bezug auf die Länge des Buchsenkörpers symmetrische Anordnung und eine achsparallele Lagerung, d. h. ohne Verkippung der Achse oder Welle erreicht wird.

Nach einem weiteren Aspekt der Erfindung wird die Gleitlagerbuchse zur Lagerung von Achsen, Wellen, Zapfen oder Bolzen in einem Stellantrieb verwendet, insbesondere einem Stellantrieb, bei welchem die Stell- oder Drehrichtung häufig wechselt, wodurch ein etwaiges Spiel zu Geräuschen führen würde. Dieses Spiel oder ein solches Lagerspiel wird durch die erfindungsgemäße Gleitlagerbuchse ausgeschaltet, so dass auch entsprechende Geräusche vermieden werden.

Nach einem weiteren Aspekt der Erfindung wird die erfindungsgemäße Gleitlagerbuchse für die Lagerung von Planetenrädern respektive Planetenbolzen in einem mehrstufigen Planetengetriebe eines Schwenkmotors zur Wankstabilisierung von Kraftfahrzeugen verwendet. Insbesondere bei dem mehrstufigen Planetengetriebe, wie es beispielsweise durch die DE 10 2014 2005 261 A1 der Anmelderin bekannt wurde. Die sich summierenden Lagerspiele der verschiedenen Planetenstufen werden bei Verwendung der erfindungsgemäßen Gleitlagerbuchsen besonders wirksam eliminiert.

Erfindungsgemäß ist bei einem Schwenkmotor eines aktiven Wankstabilisators, wie er durch die vorgenannte Druckschrift der Anmelderin bekannt wurde, vorgesehen, dass die Planetenräder mittels der erfindungsgemäßen Gleitlagerbuchsen auf den Planetenbolzen bzw. gegenüber dem Planetenträger gelagert sind. Damit werden ein Lagerspiel der Planetenräder oder Planetenbolzen und damit verbundene Klappergeräusche vermieden.

Ausführungsbeispiele der Erfindung sind in der Zeichnung dargestellt und werden im Folgenden näher beschrieben, wobei sich aus der Beschreibung und/oder der Zeichnung weitere Merkmale und/oder Vorteile ergeben können. Es zeigen
- Fig. 1: ein erstes Ausführungsbeispiel der Erfindung für eine Gleitlagerbuchse mit plastisch verbogenen Lappen,
- Fig. 2: einen Schnitt durch die Gleitlagerbuchse gemäß Fig. 1 im Bereich eines Lappens und
- Fig. 3: ein zweites Ausführungsbeispiel der Erfindung mit spiralförmig ausgebildeten, stirnseitig angeordneten Elementen.

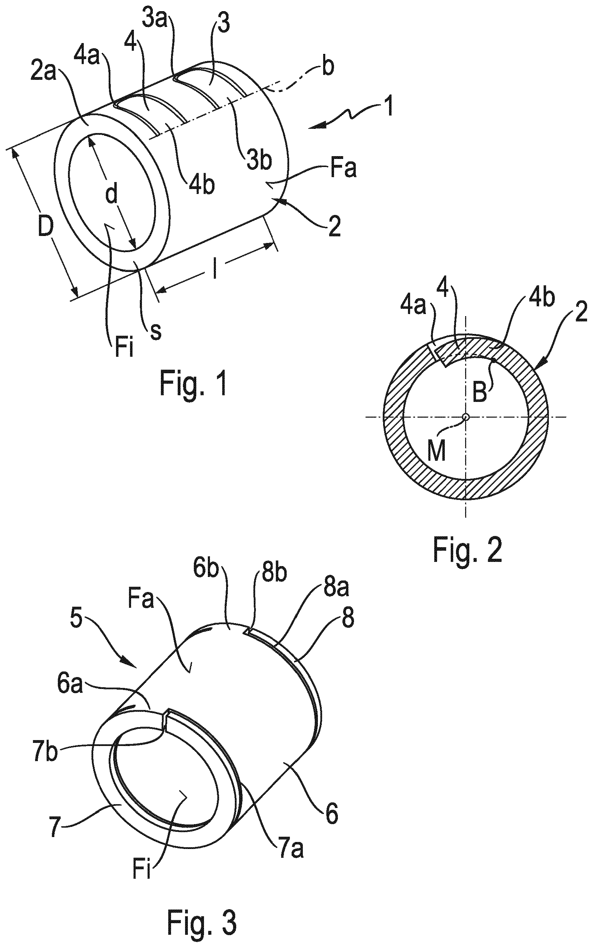

- Fig. 1: zeigt als erstes Ausführungsbeispiel der Erfindung eine Gleitlagerbuchse 1,
welche einen hohlzylindrischen Buchsenkörper 2 mit einem Innendurchmesser d, einem Außendurchmesser D, einer Zylinderwand 2a mit einer Wandstärke s sowie einer Länge I aufweist. Der Buchsenkörper 2 weist ferner eine zylindrische Innenfläche Fi und eine zylindrische Außenfläche Fa auf. Aus der Zylinderwand 2a sind zwei lappenförmige Bereiche 3, 4 jeweils durch eine in der Zeichnung etwa U-förmig verlaufende Trennfuge 3a, 4a getrennt. Die lappenförmige Bereiche 3, 4, auch Lappen 3, 4 genannt, sind über Teilbereiche 3b, 4b mit der Zylinderwand 2a verbunden.

Fig. 2 zeigt einen Radialschnitt durch den Buchsenkörper 2 gemäß Fig.1 im Bereich des Lappens 4. Der Lappen 4 - und dies gilt in gleicher Weise für den Lappen 3 - ist gegenüber der zylindrischen Außenfläche Fa in radialer Richtung nach innen, d. h. in Richtung des Mittelpunktes M versetzt und ragt somit in den kreisförmigen Querschnitt mit dem Innendurchmesser d hinein. Der Versatz des Lappens 4 nach innen wird vorzugsweise durch eine plastische Verformung, insbesondere ein plastisches Biegen um eine Biegeachse b (Fig. 1) bzw. um einen Punkt B in Fig. 2, welcher den Durchstoßpunkt der axial verlaufenden Biegekante b darstellt, erreicht. Der Lappen 4 (ebenso der Lappen 3) ist federnd ausgebildet, d. h. er bildet eine Biegefeder, welche im Bereich des Punktes B eingespannt ist. Beim Einsetzen einer Welle oder Achse (nicht dargestellt) federt der Lappen 4 nach außen, übt jedoch weiterhin eine elastische Rückstellkraft auf die Welle aus, so dass eine dauerhafte Vorspannung auf die Welle erzeugt wird. Damit wird ein Radialspiel eliminiert.

Der in der Zeichnung dargestellte radiale Versatz ist aus Gründen der Verdeutlichung stark vergrößert; tatsächlich genügen wenige Zehntel Millimeter Versatz durch plastische Verformung, um die gewünschte Vorspannung zu erzielen.

Die Gleitlagerbuchse 1 kann aus einem metallischen Werkstoff für Gleitlager, beispielsweise Messing, Bronze, Sintermetall oder aus einem Kunststoff hergestellt werden. Bei einer Herstellung durch Spritzgießen kann der Versatz der Lappen bereits in das Spritzgussteil eingeformt werden, so dass ein nachträgliches Trennen und plastisches Verformen nicht mehr notwendig ist.

In der Zeichnung sind zwei nebeneinander liegende Lappen 3, 4 dargestellt; möglich ist jedoch auch, eine größere Anzahl von Lappen, verteilt über den Umfang oder die Länge des Buchsenkörpers 2, vorzusehen. Darüber hinaus kann auch die Form der Lappen verändert werden, beispielsweise in Umfangsrichtung oder in Axialrichtung.

Die Darstellung in Fig. 2 zeigt einen nach innen in Richtung Mittelpunkt M gebogenen Lappen 4. Möglich ist jedoch auch, die Lappen durch plastische Verformung nach außen zu biegen bzw. auszustellen, so dass sie an einer Bohrung anliegen und gegenüber der Bohrung eine Vorspannung erzeugen. Diese Variante ist für den Fall vorgesehen, dass die Gleitlagerbuchse 1 auf eine Welle oder eine Achse aufgepresst wird und in einer Lagerbohrung, z. B. in einem Gehäuse gelagert wird. Durch die nach außen gestellten, federnden Lappen wird ein Radialspiel zwischen Gleitlagerbuchse und Bohrung beseitigt.

Fig. 3 zeigt ein weiteres Ausführungsbeispiel der Erfindung für eine Gleitlagerbuchse 5, welche einen hohlzylindrischen Buchsenkörper 6 aufweist, der in analoger Weise wie in Fig. 1 dargestellt, eine kreiszylindrische Außenfläche Fa, eine kreiszylindrische Innenfläche Fi sowie eine erste Stirnseite 6a und eine zweite Stirnseite 6b aufweist. Im Unterschied zu dem Ausführungsbeispiel gemäß Fig. 1 und Fig. 2 sind die getrennten, federnden Bereiche hier als spiral- oder kreisringförmige Elemente 7, 8 ausgebildet, welche einerseits durch umlaufende Trennfugen 7a, 8a und andererseits durch axial verlaufende weitere Trennfugen 7b, 8b vom Buchsenkörper 6 getrennt sind. Die kreisringförmigen Elemente 7, 8 sind im Bereich ihrer Verbindung mit dem Buchsenkörper 6 um eine axial verlaufende Biegekante (nicht dargestellt) derart versetzt, dass der Mittelpunkt der kreisringförmigen Elemente nicht mehr auf der Längsachse des Buchsenkörpers 6 liegt. Dieser Versatz oder diese Auslenkung der kreisringförmigen Elemente 7, 8 kann durch plastisches Abkanten als bleibende Verformung erreicht werden oder bereits im Spritzgussteil vorgesehen sein. Die kreisringförmigen Elemente 7, 8 sind ebenfalls als Federelemente ausgebildet, welche geeignet sind, zwischen Welle und Gleitlagerbuchse 5 bzw. zwischen einer Bohrung und der Gleitlagerbuchse 5 ein Radialspiel aufgrund einer elastischen Vorspannung zu vermeiden.

### Bezugszeichen

- 1: Gleitlagerbuchse
- 2: Buchsenkörper
- 2a: Zylinderwand
- 3: Lappen
- 3a: Trennfuge
- 3b: Teilbereich
- 4: Lappen
- 4a: Trennfuge
- 4b: Teilbereich
- 5: Gleitlagerbuchse
- 6: Buchsenkörper
- 6a: erste Stirnseite
- 6b: zweite Stirnseite
- 7: spiralförmiges Element
- 7a: Trennfuge
- 7b: Trennfuge
- 8: spiralförmiges Element
- 8a: Trennfuge
- 8b: Trennfuge

- b: Biegeachse
- B: Durchstoßpunkt Biegeachse b
- d: Innendurchmesser
- D: Außendurchmesser
- Fi: Innenfläche
- Fa: Außenfläche
- M: Mittelpunkt
- s: Wandstärke

## Patentansprüche

1. Schwenkmotor eines aktiven Wankstabilisators, umfassend ein mehrstufiges Planetengetriebe mit auf Planetenbolzen gelagerten Planetenrädern, wobei die Planetenräder über Gleitlagerbuchsen (1, 5) gelagert sind, wobei eine Gleitlagerbuchse (1, 5) einen hohlzylindrischen Buchsenkörper (2, 6) mit einer zylindrischen Innenfläche (Fi) und einem Innendurchmesser (d) und/oder mit einer zylindrischen Außenfläche (Fa) und einem Außendurchmesser (D) sowie einer Zylinderwand (2a) mit einer Wandstärke (s) aufweist, **dadurch gekennzeichnet dass**
sich in tangentialer und axialer Richtung erstreckende Bereiche (3, 4, 7, 8) der Zylinderwand (2a) teilweise von der Zylinderwand (2a) getrennt und teilweise mit der Zylinderwand (2a) verbunden sind, wobei die Bereiche (3, 4, 7, 8) gegenüber der Innen- oder der Außenfläche (Fi. Fa) derart versetzt angeordnet sind, dass der Innendurchmesser (d) partiell verkleinert oder der Außendurchmesser (D) partiell vergrößert ist, und dass die Bereiche (3, 4, 7, 8) plastisch verformt sind.

2. Schwenkmotor nach Anspruch 1, **dadurch gekennzeichnet, dass** die Bereiche (3, 4) um eine in axialer Richtung verlaufende Biegeachse (b) nach innen oder nach außen gebogen sind.

3. Schwenkmotor nach Anspruch 1oder 2 , **dadurch gekennzeichnet, dass** die Bereiche als ausgestellte Lappen (3, 4) ausgebildet sind und sich über einen Teil des Umfangs der Zylinderwand (2a) erstrecken.

4. Schwenkmotor nach Anspruch 3, **dadurch gekennzeichnet, dass** mehrere Lappen (3, 4) in tangentialer Richtung auf dem Umfang verteilt und/oder in axialer Richtung über die Länge (l) des Buchsenkörpers (2) verteilt angeordnet sind.

5. Schwenkmotor nach Anspruch 1, **dadurch gekennzeichnet, dass** die Bereiche als spiral- oder kreisringförmige Elemente (7, 8), die sich nahezu über dem gesamten Umfang erstrecken, ausgebildet sind.

6. Schwenkmotor nach Anspruch 5, **dadurch gekennzeichnet, dass** die spiral- oder kreisringförmigen Elemente (7, 8) durch eine umlaufende Trennfuge (7a, 8a) und eine in axialer Richtung verlaufende weitere Trennfuge (7b, 8b) vom Buchsenkörper (6) getrennt sind.

7. Schwenkmotor nach Anspruch 5 oder 6, **dadurch gekennzeichnet, dass** die spiral-oder kreisringförmigen Elemente (7, 8) stirnseitig am Buchsenkörper (6) angeordnet sind.

## Claims

1. Pivot motor of an active anti-roll bar, comprising a multi-step planetary gear mechanism with planetary gears which are mounted on planet journals, the planetary gears being mounted via plain bearing bushes (1, 5), a plain bearing bush (1, 5) having a hollow-cylindrical bush body (2, 6) with a cylindrical inner face (Fi) and an internal diameter (d) and/or with a cylindrical outer face (Fa) and an external diameter (D) and a cylinder wall (2a) with a wall thickness (s), **characterized in that** regions (3, 4, 7, 8) of the cylinder wall (2a) which extend in the tangential and axial direction are separated in part from the cylinder wall (2a) and are connected in part to the cylinder wall (2a), the regions (3, 4, 7, 8) being arranged offset with respect to the inner or the outer face (Fi, Fa) in such a way that the internal diameter (d) is partially reduced in size or the external diameter (D) is partially increased in size, and **in that** the regions (3, 4, 7, 8) are deformed plastically.

2. Pivot motor according to Claim 1, **characterized in that** the regions (3, 4) are bent towards the inside or towards the outside about a bending axis (b) which runs in the axial direction.

3. Pivot motor according to Claim 1 or 2, **characterized in that** the regions are configured as flared tabs (3, 4) and extend over a part of the circumference of the cylinder wall (2a).

4. Pivot motor according to Claim 3, **characterized in that** a plurality of tabs (3, 4) are arranged distributed in the tangential direction on the circumference and/or distributed in the axial direction over the length (1) of the bush body (2).

5. Pivot body according to Claim 1, **characterized in that** the regions are configured as spiral or circularly annular elements (7, 8) which extend almost over the entire circumference.

6. Pivot motor according to Claim 5, **characterized in that** the spiral or circularly annular elements (7, 8) are separated from the bush body (6) by way of a circumferential parting line (7a, 8a) and a further parting line (7b, 8b) which runs in the axial direction.

7. Pivot motor according to Claim 5 or 6, **characterized in that** the spiral or circularly annular elements (7, 8) are arranged on the bush body (6) on the end side.

## Revendications

1. Moteur oscillant d'un stabilisateur de roulis actif, comprenant un engrenage planétaire à plusieurs étages avec des satellites montés sur des goujons porte-satellites, les satellites étant montés par l'intermédiaire de coussinets lisses (1, 5), un coussinet lisse (1, 5) présentant un corps de coussinet cylindrique creux (2, 6) ayant une surface intérieure cylindrique (Fi) et un diamètre intérieur (d) et/ou ayant une surface extérieure cylindrique (Fa) et un diamètre extérieur (D) ainsi qu'une paroi cylindrique (2a) ayant une épaisseur de paroi (s), **caractérisé en ce que** des zones (3, 4, 7, 8) de la paroi cylindrique (2a) s'étendant dans la direction tangentielle et axiale sont partiellement séparées de la paroi cylindrique (2a) et partiellement reliées à la paroi cylindrique (2a), les zones (3, 4, 7, 8) étant agencées en décalage par rapport à la surface intérieure ou extérieure (Fi, Fa), de telle sorte que le diamètre intérieur (d) est partiellement réduit ou le diamètre extérieur (D) est partiellement agrandi, et **en ce que** les zones (3, 4, 7, 8) sont déformées plastiquement.

2. Moteur oscillant selon la revendication 1, **caractérisé en ce que** les zones (3, 4) sont pliées vers l'intérieur ou vers l'extérieur autour d'un axe de pliage (b) s'étendant dans la direction axiale.

3. Moteur oscillant selon la revendication 1 ou 2, **caractérisé en ce que** les zones sont configurées sous forme de pattes évasées (3, 4) et s'étendent sur une partie de la circonférence de la paroi cylindrique (2a) .

4. Moteur oscillant selon la revendication 3, **caractérisé en ce que** plusieurs pattes (3, 4) sont agencées de manière répartie dans la direction tangentielle sur la circonférence et/ou de manière répartie dans la direction axiale sur la longueur (l) du corps de coussinet (2).

5. Moteur oscillant selon la revendication 1, **caractérisé en ce que** les zones sont configurées sous forme d'éléments en forme de spirale ou d'anneau circulaire (7, 8), qui s'étendent sur presque toute la circonférence.

6. Moteur oscillant selon la revendication 5, **caractérisé en ce que** les éléments en forme de spirale ou d'anneau circulaire (7, 8) sont séparés du corps de coussinet (6) par un joint de séparation périphérique (7a, 8a) et un autre joint de séparation (7b, 8b) s'étendant dans la direction axiale.

7. Moteur oscillant selon la revendication 5 ou 6, **caractérisé en ce que** les éléments (7, 8) en forme de spirale ou d'anneau circulaire sont agencés sur le côté frontal du corps de coussinet (6).
